# EUROPEAN PATENT APPLICATION

(11) **EP 4 693 164 A1**
(43) Date of publication of application: **11.02.2026**
(21) Application number: 24838320.0
(22) Date of filing: 07.03.2024
(51) Int. Cl.: G06T 1/20, G06T 5/50, G06T 7/90, G06T 11/60

(54) **LAYER COMPOSITION METHOD, ELECTRONIC DEVICE AND STORAGE MEDIUM**

(30) Priority: 12.07.2023 CN 202310862645
(71) Applicant: Honor Device Co., Ltd., Shenzhen, Guangdong 518040 (CN)
(72) Inventor: MA, Da, Shenzhen, Guangdong 518040 (CN)
(74) Representative: Gill Jennings & Every LLP
(86) International application number: PCT/CN2024/080477
(87) International publication number: WO 2025/011059

(57) **Abstract**

This application relates to the field of display technologies, and provides a surface composition method, an electronic device, and a storage medium. The method is applied to an electronic device, specifically including: obtaining to-be-displayed data; generating a surface in a UBWC format corresponding to the to-be-displayed data when the to-be-displayed data satisfies a first condition, where the first condition is displaying the surface of the to-be-displayed data after transform; performing a transform operation on the surface in the UBWC format, to obtain a transformed surface in the UBWC format; and performing surface composition on the transformed surface in the UBWC format. When the surface of the to-be-displayed data needs to be transformed and then displayed, the format of the generated surface corresponding to the to-be-displayed data is controlled to be the UBWC format, so as to omit preprocessing of a transformed surface in a non-UBWC format by an IWE module, thereby avoiding a phenomenon of continuous frame losses as a result of the IWE module spending an excessively long time in preprocessing, and improving display smoothness of the electronic device.

## Description

The present invention claims priority to Chinese Patent Application 202310862645.5, filed with the China National Intellectual Property Administration on July 12, 2023 and entitled "SURFACE COMPOSITION METHOD, ELECTRONIC DEVICE, AND STORAGE MEDIUM".

### TECHNICAL FIELD

This application relates to the field of display technologies, and in particular, to a surface composition method, an electronic device, and a storage medium.

### BACKGROUND

With rapid development of science and technology, a universal bandwidth compression (Universal Bandwidth Compression, UBWC) technology achieves increasingly wide application. Generally, at a decoding stage of image or video data, a format of an outputted surface is set to a UBWC format, which can effectively improve a system memory throughput, thereby improving a memory transmission speed and reducing power consumption.

In a surface composition process, a display processing unit (display processing unit, DPU) supports transform operations such as rotation and zoom on a surface in a UBWC format, but does not support transform operations such as rotation and zoom on a surface in a non-UBWC format. To resolve the problem that transform operations such as rotation and zoom on a surface in a non-UBWC format are not supported, in a related technology, an IWE module is added to the display processing unit to perform preprocessing on a to-be-transformed surface in a non-UBWC format (for example, a to-be-rotated surface or a to-be-zoomed surface), thereby making up for a deficiency of the display processing unit in processing a surface in a non-UBWC format.

In the related art, the IWE module spends a relatively long time in preprocessing a to-be-transformed surface in a non-UBWC format, which causes continuous frame losses of video/image data and results in an obvious frame freezing during display on an electronic device.

### SUMMARY

This application provides a surface composition method, an electronic device, and a storage medium, to avoid continuous frame losses of video/image data as a result of an IWE module spending a relatively long time in preprocessing a to-be-transformed surface in a non-UBWC format, and improve display smoothness of an electronic device.

To achieve the foregoing objective, the following technical solutions are used in this application:

According to a first aspect, this application provides a surface composition method. The method is applied to an electronic device, and includes: obtaining to-be-displayed data; generating a surface in a UBWC format corresponding to the to-be-displayed data when the to-be-displayed data satisfies a first condition, where the first condition is displaying the surface of the to-be-displayed data after transform; performing a transform operation on the surface in the UBWC format, to obtain a transformed surface in the UBWC format; and performing surface composition on the transformed surface in the UBWC format. When the surface of the to-be-displayed data needs to be transformed and then displayed, the format of the surface corresponding to the generated to-be-displayed data is controlled to be the UBWC format, so as to omit preprocessing on a transformed surface in a non-UBWC format by an IWE module, thereby avoiding a phenomenon of continuous frame losses as a result of the IWE module spending an excessively long time in preprocessing, and improving display smoothness of the electronic device.

In a possible implementation, it is determined based on shape data of the surface corresponding to the to-be-displayed data whether the to-be-displayed data satisfies the first condition. The shape data of the surface includes a length of the surface and a width of the surface. When the length of the surface corresponding to the to-be-displayed data is greater than the width of the surface corresponding to the to-be-displayed data, the to-be-displayed data satisfies the first condition. Determining, based on the shape data of the surface of the to-be-displayed data, whether a transform operation needs to be performed can simplify the determining step.

In a possible implementation, when the to-be-displayed data does not satisfy the first condition, a surface in a non-UBWC format corresponding to the to-be-displayed data is directly generated, and surface composition is performed on the surface in the non-UBWC format. When the surface of the to-be-displayed data does not need to be transformed and then displayed, the transform operation is not performed on the surface, the surface in the non-UBWC format is directly generated, and surface composition is performed on the surface in the non-UBWC format. In this way, preprocessing the transformed surface in the non-UBWC format by the IWE module is omitted, a phenomenon of continuous frame losses as a result of the IWE module spending an excessively long time in preprocessing is also avoided, and display smoothness of the electronic device is improved.

In a possible implementation, after the surface in the non-UBWC format corresponding to the to-be-displayed data is generated, image processing is performed on the surface in the non-UBWC format, to obtain a surface in the non-UBWC format after the image processing; and surface composition is performed on the surface in the non-UBWC format after the image processing. After the image processing is performed on the surface in the non-UBWC format, because no transform operation is performed, the IWE module does not perform preprocessing on a transformed surface in the non-UBWC format, so that preprocessing by the IWE module is still avoided.

In a possible implementation, it is determined based on shape data of the surface corresponding to the to-be-displayed data whether the to-be-displayed data satisfies the first condition. The shape data of the surface includes a length of the surface and a width of the surface. When the length of the surface corresponding to the to-be-displayed data is less than or equal to the width of the surface corresponding to the to-be-displayed data, the to-be-displayed data does not satisfy the first condition.

In a possible implementation, after the to-be-displayed data is obtained, a surface in a non-UBWC format corresponding to the to-be-displayed data is generated; image processing is performed on the surface in the non-UBWC format, to obtain a surface in the non-UBWC format after the image processing; format conversion is performed on the surface in the non-UBWC format after the image processing, to obtain a corresponding surface in a UBWC format after the image processing; a transform operation is performed on the surface in the UBWC format after the image processing, to obtain a transformed surface in the UBWC format after the image processing; and surface composition is performed on the transformed surface in the UBWC format after the image processing. In a case that image processing and a transform operation are inevitable, the format of the surface is converted, so as to omit preprocessing by the IWE module, thereby avoiding a phenomenon of continuous frame losses as a result of the IWE module spending an excessively long time in preprocessing, and improving display smoothness of the electronic device.

In a possible implementation, it is determined whether an application obtaining the to-be-displayed data is located in a whitelist; and it is determined, when the application obtaining the to-be-displayed data is located in the whitelist, whether the to-be-displayed data satisfies the first condition.

In a possible implementation, the electronic device includes a display processing unit DPU, the DPU is provided with an IWE module, an operating frequency of the DPU is increased, so as to increase a processing frequency of the IWE module. A surface in a non-UBWC format corresponding to the to-be-displayed data is generated when the application obtaining the to-be-displayed data is not located in the whitelist; a transform operation is performed on the surface in the non-UBWC format, to obtain a corresponding transformed surface in the non-UBWC format; preprocessing is performed on the transformed surface in the non-UBWC format by using the IWE module with the increased processing frequency; and surface composition is performed on the transformed surface in the non-UBWC format after the preprocessing. When preprocessing by the IWE module is inevitable, a processing frequency of the IWE module is increased, to shorten a preprocessing time spent by the IWE module, thereby reducing a phenomenon of continuous frame losses and improving display smoothness of the electronic device.

According to a second aspect, this application provides an electronic device. The electronic device includes a processor and a memory. The memory stores computer-executable instructions. The processor executes the computer-executable instructions stored in the memory, to cause the processor to perform the method according to the foregoing first aspect.

According to a third aspect, this application provides a computer-readable storage medium, storing a computer program or instructions that, when run, implement the method according to the foregoing first aspect.

According to a fourth aspect, this application provides a computer program product, including a computer program or instructions that, when executed by a processor, implement the method according to the foregoing first aspect.

### BRIEF DESCRIPTION OF DRAWINGS

FIG. 1 is a schematic diagram of a display pipeline process of an electronic device in the related art;
FIG. 2A is a simplified schematic diagram of a rotation and composition process of a surface in a UBWC format in the related art;
FIG. 2B is a simplified schematic diagram of a rotation and composition process of a surface in a non-UBWC format in the related art;
FIG. 3 is a schematic diagram of another display pipeline process of an electronic device in the related art;
FIG. 4A is an example composition diagram of an electronic device according to an embodiment of this application;
FIG. 4B is an example diagram of a software structure of an electronic device according to an embodiment of this application;
FIG. 5 is a simplified schematic diagram of a display pipeline process of an electronic device according to an embodiment of this application;
FIG. 6 is a schematic flowchart of a surface composition method according to an embodiment of this application;
FIG. 7 is a schematic flowchart of another surface composition method according to an embodiment of this application;
FIG. 8 is a schematic flowchart of another surface composition method according to an embodiment of this application; and
FIG. 9 is a schematic flowchart of another surface composition method according to an embodiment of this application.

### DESCRIPTION OF EMBODIMENTS

Terms "first", "second", "third", and the like in the specification, claims, and drawings of this application are used to distinguish between different objects rather than to limit a specific order.

In embodiments of this application, a term such as "in an example" or "for example" is used to represent giving an example, an illustration, or a description. Any embodiment or design solution described as "in an example" or "for example" in embodiments of this application should not be explained as being more preferred or having more advantages than another embodiment or design solution. Exactly, use of the term such as "in an example" or "for example" is intended to present a related concept in a specific manner.

For clarity and brevity of the following embodiments, a brief description of a related technology is first provided.

UBWC (Universal Bandwidth Compression, universal bandwidth compression) technology: It is a prediction band compression technology, which improves a system memory throughput by minimizing a data bandwidth, thereby improving a memory transmission speed, and reducing power consumption.

Surface (surface): Each application may correspond to one or more graphical interfaces, and each graphical interface may be referred to as a surface. A display interface of an electronic device is generally composed of a plurality of surfaces. Each surface in the display interface has a position, a size, and to-be-displayed content on a screen. During running of an application, a position, a size, or to-be-displayed content of a surface corresponding to the application may change. Each surface has a corresponding surface attribute, and the surface attribute may include information such as a position and a size of the corresponding surface.

Buffer queue (buffer queue): Each surface has a corresponding buffer queue, and the buffer queue is used to store to-be-displayed data of the corresponding surface. The to-be-displayed data is used to indicate to-be-displayed content of a corresponding surface. In other words, the to-be-displayed data of the surface may be an image obtained after the surface is rendered.

Frame buffer (frame buffer): It is a continuous physical memory in an embedded system specially reserved for a GPU (Graphics Processing Unit, graphics processing unit), a DPU (display processing unit, display processing unit), and the like. A display reads data from the frame buffer through a dedicated bus, and displays the data on a screen.

Advantages of a rotated surface composition method for video data in embodiments of this application are described below in comparison with a rotated surface composition method for video data in the related art.

Before the rotated surface composition method for video data is described, a display process of a display of an electronic device (which may also be referred to as a display pipeline of a display system of the electronic device) is first described. The display process of the display of the electronic device mainly includes three processes: application rendering, surface composition, and presentation drive. In other words, a frame of image can be displayed on a display only after a display system sequentially performs an application rendering process, a surface composition process, and a presentation drive process. The application rendering process refers to performing rendering on a surface of an application based on a view update request. The surface composition process refers to compositing a plurality of surfaces rendered in the application rendering process to generate a composite surface. The composite surface is a to-be-displayed image frame. The presentation drive process refers to performing display drive on the to-be-displayed image frame generated in the surface composition process, and pushing the to-be-displayed image frame to a display.

In the related art, to avoid frame freezing and improve a visual effect of a surface, an electronic device usually performs display based on a vertical synchronization (Vertical Synchronization, Vsync) signal, that is, synchronizes the application rendering process, the surface composition process, and the presentation drive processes in the display pipeline by using the Vsync signal. The Vsync signal is generated by a Surface Flinger, that is, the Surface Flinger is further configured to generate and deliver the Vsync signal. Specifically, the Vsync signal is used to trigger the three processes, i.e., application rendering, surface composition, and presentation drive. To be specific, after an application on an application layer of an electronic device receives the Vsync signal, the application performs drawing and rendering on image data through a view system; after receiving the Vsync signal, a surface management module of the electronic device may perform surface composition on the drawn and rendered image data; and after receiving the Vsync signal, a display of the electronic device may invoke a display driver of a kernel layer to display the composite image data. The electronic device may sequentially perform the three processes in the display pipeline based on a "tempo" of the Vsync signal. However, application rendering, surface composition, and presentation drive are different. Within a period of one Vsync signal, the electronic device respectively performs application rendering, surface composition, and presentation drive once.

Software in the electronic device related to the surface composition process includes but is not limited to a surface management module (Surface flinger). Hardware in the electronic device related to the surface composition includes but is not limited to a GPU and an HWC. The GPU and the HWC are configured to provide hardware support for the Surface flinger.

Surface management module (Surface flinger): It may also serve as a surface deliverer, which is a service system. The system is mainly configured to implement functions such as surface creation, control, and management. In the display system of the electronic device, Surface composition may be implemented through the Surface flinger. For example, after an application is started, the Surface flinger may create a surface for the application. During running of the terminal, the Surface flinger may obtain to-be-displayed surfaces of various applications run on the terminal, and composite the obtained surfaces through the GPU and/or the HWC.

GPU composition: A GPU is a universal image processing device. In addition to surface composition, the GPU is further configured to complete other graphics processing tasks. GPU composition refers to a surface composition manner of compositing surfaces through the GPU.

HWC composition: An HWC is a dedicated image processing device, which is configured to perform surface composition and display. The HWC may be an independent device, or may be integrated into a system on chip. HWC composition refers to a surface composition manner of compositing surfaces through the HWC. During HWC composition, each surface needs to occupy one transmission channel of the HWC, while transmission channels of the HWC are limited. Therefore, a quantity of surfaces that can be composited by the HWC is limited.

For ease of understanding, a surface composition process is described below by using an example. It is assumed that the to-be-displayed interface of the electronic device includes two surfaces, which are respectively a status bar A on the top and an application interface B of an application b, and that the quantity of surfaces that can be composited by the HWC is greater than two. During surface composition on the two surfaces included in the to-be-displayed interface, the Surface flinger transmits the two surfaces, i.e., the status bar A on the top and the application interface B of the application b, to the HWC, and the HWC composites the status bar A on the top and the application interface B of the application b, to obtain a composite surface, thereby completing the surface composition process.

Specifically, the display pipeline of the electronic device is actually a buffer transfer. For example, the application starts to perform application rendering based on a Vsync-app signal, and transmits a rendered buffer to the Surface flinger for composition. The Surface flinger starts to select a corresponding buffer based on a Vsync-sf signal and performs surface composition through the HWC or the GPU. A finally composite surface is presented through a display driver, and is refreshed onto a screen when a screen hardware TE signal arrives, thus completing the entire display pipeline process. In the related art, to ensure a display process sequence, a fence mechanism is introduced. To be specific, the fence mechanism is added to a buffer transfer process. Specifically, In the display pipeline process, it is examined whether a fence is available when a next operation is to be performed. If the fence is available, the next operation is performed. If the fence is unavailable, the next operation is performed only when the fence becomes available. Therefore, presentation drive can be performed only after the surface composition process ends and the fence is released. The fence mechanism can ensure the application rendering process, the surface composition process, and the presentation drive process in the display pipeline to be performed in sequence (that is, in a process sequence of application rendering-surface composition-presentation drive), thereby implementing the display pipeline.

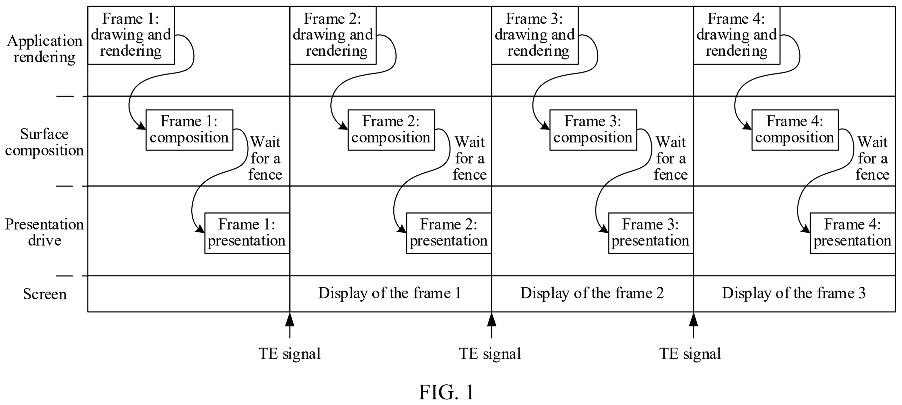

For ease of understanding, the display pipeline process of the electronic device is described below by using an example with reference to FIG. 1. A description is provided by using an example in which the electronic device displays a video. The to-be-displayed video is a 4-frame video. In chronological order of playback, content displayed by the electronic device sequentially corresponds to a frame 1, a frame 2, a frame 3, and a frame 4.

Display of the frame 1 is used as an example. An application of the electronic device draws the frame 1 through a view system and renders the frame 1 through an image rendering system. After the frame 1 is drawn and rendered, the application of the electronic device transmits a drawn and rendered frame 1 to an image composition system. The image composition system performs surface composition on the drawn and rendered frame 1 through the HWC or the GPU. After the surface composition process of the frame 1 is completed and the fence is released, the electronic device may invoke the display driver of the kernel layer to refresh and display the composite frame 1 onto the screen when the screen hardware TE signal arrives. It should be noted that display pipeline processes of the frame 2, the frame 3, and the frame 4 are similar to that of the frame 1, which are not described in detail herein.

In the related art, due to an insufficient processing capability, a display processing unit cannot directly perform image processing on a surface in a UBWC format by using an image/video processing algorithm (for example, a video enhancement algorithm or a video slow-motion algorithm), and can only perform image processing on a surface in a non-UBWC format. Therefore, a format of a surface on which image processing can be performed is necessarily a non-UBWC format, and a format of a surface on which image processing is completed is necessarily a non-UBWC format. Therefore, a display processing unit (display processing unit, DPU) in the current technology is adaptive to data in a UBWC format, and the DPU can perform operations such as rotation and zoom on a surface in a UBWC format in a surface composition stage, which, however, cannot perform operations such as rotation and zoom on a surface in a non-UBWC (non-UBWC) format.

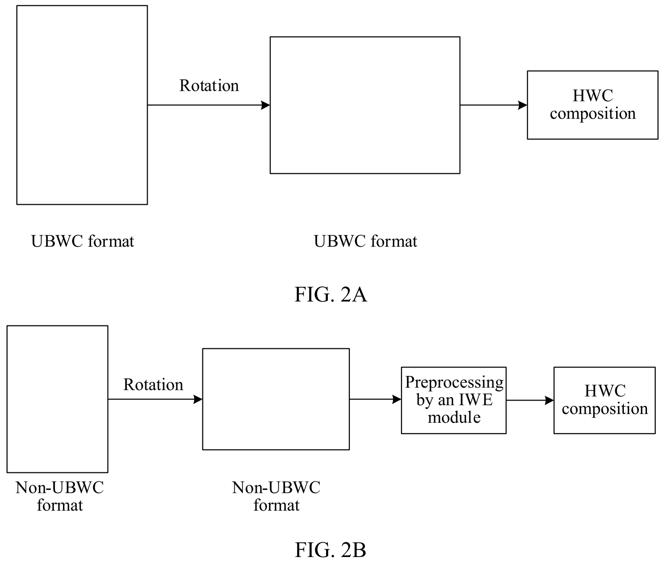

For ease of understanding, a description is provided below with reference to FIG. 2A and FIG. 2B. A description is provided below by using rotation by 90° as an example.

FIG. 2A is a schematic diagram of a surface composition process of a to-be-rotated surface in a UBWC format. The display processing unit can perform a rotation operation on a surface in a UBWC format, which can implement the rotation operation on the surface in the UBWC format without introducing preprocessing of another module, and then performs corresponding surface composition through the HWC.

Due to an insufficient processing capability, the display processing unit cannot perform composition on a to-be-transformed surface (for example, a to-be-rotated surface or a to-be-zoomed surface) in a non-UBWC format. The composition of the transformed surface in the non-UBWC format needs a graphics processing unit (Graphic Processing Unit, GPU), which causes an additional power consumption. To avoid the additional power consumption, an IWE module is added to the DPU to make up for the insufficient processing capability of the DPU for a transformed surface in a specific format (the non-UBWC format). In other words, an IWE module is added to the DPU to assist the DPU in processing the to-be-rotated surface in the non-UBWC format. The IWE module is a data processing module, which is mainly configured to process a transformed surface in a specific format (for example, a to-be-rotated surface in a non-UBWC format). FIG. 2B is a schematic diagram of a surface composition process of a to-be-rotated surface in a non-UBWC format. After a rotation operation is performed on a surface in a non-UBWC format, preprocessing is performed on the to-be-rotated surface in the non-UBWC format through the IWE module, and then composition is performed on the corresponding to-be-rotated surface in the non-UBWC format after the preprocessing through the HWC, to make up for the insufficient processing capability of the DPU for a surface in a specific format (the non-UBWC format), thereby avoiding an additional power consumption from surface composition through the GPU.

In the related art, introducing the IWE module to the DPU to support composition on a transformed surface in a non-UBWC format after a transform operation such as rotation or zoom is performed on the surface in the non-UBWC format avoids an additional power consumption from surface composition through the GPU. Nevertheless, due to an insufficient processing capability of the IWE module, an excessively long preprocessing time is required for the transformed surface in the non-UBWC format. Consequently, the entire surface composition process spends a relatively long time, and the fence cannot be released on time in the surface composition process. Therefore, the display driver keeps waiting for the fence released when the surface composition process ends, causing the display driver to miss a screen hardware TE signal. In other words, the display driver of the kernel layer cannot be invoked to refresh and display the composite surface onto a screen when the screen hardware TE signal arrives, causing continuous video frame losses and obvious frame freezing.

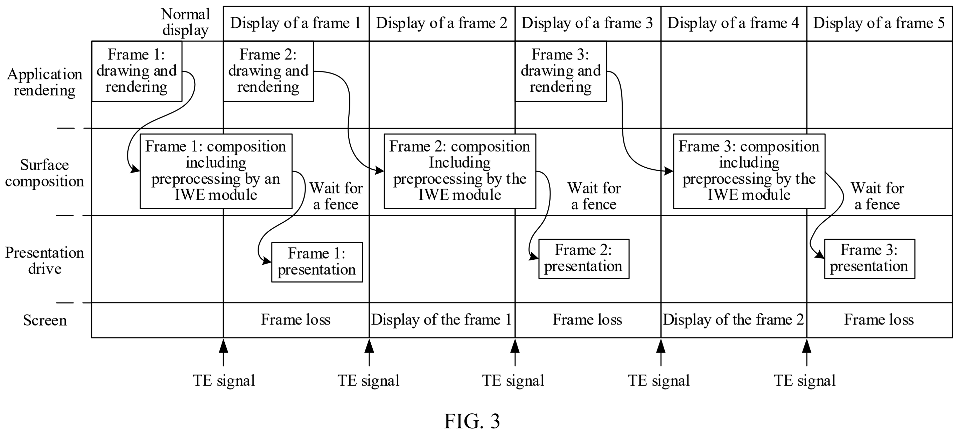

For ease of understanding, another display pipeline process of an electronic device is described below by using an example with reference to FIG. 3, in which an IWE module is introduced to a surface composition process to perform preprocessing on a to-be-rotated surface in a non-UBWC format. A description is provided by using an example in which the electronic device displays a video and the video is played in full screen (that is, the original surface in the non-UBWC format is rotated mainly by 90°). The to-be-displayed video is a 4-frame video. In chronological order of playback, content displayed by the electronic device sequentially corresponds to a frame 1, a frame 2, a frame 3, and a frame 4.

Display of the frame 1 is used as an example. An application of the electronic device draws the frame 1 through a view system and renders the frame 1 through an image rendering system. After the frame 1 is drawn and rendered, the application of the electronic device transmits a drawn and rendered frame 1 to an image composition system. The image composition system performs preprocessing on a to-be-rotated surface in the non-UBWC format through the IWE module. After the preprocessing by the IWE module is completed, surface composition is performed through the HWC. If the surface composition on the frame 1 is not completed when a screen hardware TE signal arrives and the composite frame 1 needs to be refreshed and displayed onto a screen, waiting for the surface composition on the frame 1 to be completed, the fence to be released, and a next screen hardware TE signal to arrive is required, to refresh and display the composite frame 1 onto the screen. However, when the next screen hardware TE signal arrives, a next frame (namely, a composite frame 2) needs to be refreshed and displayed, resulting in frame losses. After the composite frame 1 is refreshed and displayed onto the screen when the second screen hardware TE signal arrives, display pipeline processes of the frame 2, the frame 3, and the frame 4 are sequentially performed. Details are not described herein. Therefore, due to the insufficient processing capability of the introduced IWE module, the IWE module spends a relatively long time in preprocessing the to-be-rotated surface in the non-UBWC format, resulting in continuous video frame losses, obvious frame freezing, and relatively poor user experience.

This application provides a surface composition method. The method includes: obtaining to-be-displayed data; generating a surface in a UBWC format corresponding to the to-be-displayed data when the to-be-displayed data satisfies a first condition, where the first condition is displaying the surface of the to-be-displayed data after transform; performing a transform operation on the surface in the UBWC format, to obtain a transformed surface in the UBWC format; and performing surface composition on the transformed surface in the UBWC format. When the surface of the to-be-displayed data needs to be transformed and then displayed, the format of the generated surface corresponding to the to-be-displayed data is controlled to be the UBWC format, so as to omit preprocessing of a transformed surface in a non-UBWC format by the IWE module, thereby avoiding a phenomenon of continuous frame losses as a result of the IWE module spending an excessively long time in preprocessing, and improving display smoothness of the electronic device.

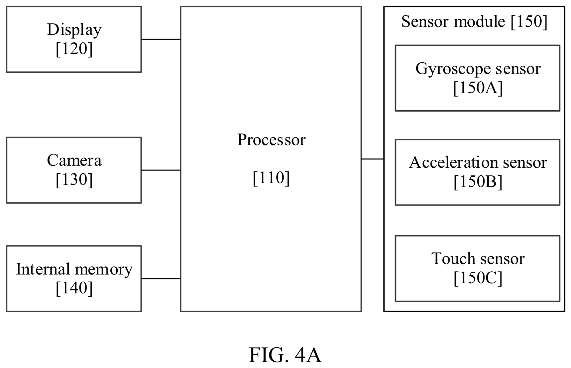

In some embodiments, the electronic device may be a mobile phone, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), a wearable electronic device, a smartwatch, or the like. A specific form of the electronic device is not specially limited in this application. In this embodiment, a structure of the electronic device may be shown in FIG. 4A. FIG. 4A is a schematic structural diagram of an electronic device according to an embodiment of this application.

As shown in FIG. 4A, the electronic device may include a processor 110, a display 120, a camera 130, an internal memory 140, a sensor module 150, and the like. The sensor module 150 may include a gyroscope sensor 150A, an acceleration sensor 150B, a touch sensor 150C, and the like.

It may be understood that the structure shown in this embodiment constitutes no specific limitation on the electronic device. In some other embodiments, the electronic device may include more or fewer components than those shown in the figure, some merged components, some split components or different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate devices, or may be integrated into one or more processors. For example, in this application, it is determined whether the to-be-displayed data satisfies a first condition, and if the to-be-displayed data satisfies the first condition, the surface in the UBWC format corresponding to the to-be-displayed data is generated.

The controller may be a nerve center and command center of the electronic device. The controller may generate an operation control signal based on instruction operation code and a sequence signal, and control obtaining and executing of instructions.

A memory may be further arranged in the processor 110, which is configured to store instructions and data. In some embodiments, the memory in the processor 110 is a cache memory. The memory may store instructions or data that is recently used or cyclically used by the processor 110. If the processor 110 needs to use the instructions or the data again, the processor may directly invoke the instructions or the data from the memory. This avoids repeated access, and reduces a waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus and includes a serial data line (serial data line, SDA) and a serial clock line (derail clock line, SCL). In some embodiments, the processor 110 may include a plurality of I2C buses. The processor 110 may be coupled to the touch sensor 150C, a charger, a flash light, the camera, and the like by using different I2C bus interfaces. For example, the processor 110 may be coupled to the touch sensor 150C by using the I2C interface, so that the processor 110 communicates with the touch sensor 150C by using the I2C bus interface, to implement a touch function of the electronic device.

The MIPI may be configured to connect the processor 110 to peripheral devices such as the display 120 and the camera 130. The MIPI includes a camera serial interface (camera serial interface, CSI), a display serial interface (display serial interface, DSI), and the like. In some embodiments, the processor 110 communicates with the camera 130 by using the CSI interface, to implement a photographing function of the electronic device. The processor 110 communicates with the display 120 by using the DSI interface, to implement a display function of the electronic device.

The GPIO interface may be configured by software. The GPIO interface may be configured as a control signal, or may be configured as a data signal. In some embodiments, the GPIO interface may be configured to connect the processor 110 to the camera 130, the display 120, the sensor module 150, and the like. The GPIO interface may be further configured as an I2C interface, an I2S interface, a UART interface, an MIPI interface, or the like.

It may be understood that an interface connection relationship between the modules shown in this embodiment is merely an example for descriptions, and does not constitute a limitation on the structure of the electronic device. In some other embodiments of this application, the electronic device may alternatively use an interface connection manner different from that in the foregoing embodiment, or use a combination of a plurality of interface connection manners.

The electronic device implements a display function through the GPU, the display 120, the application processor, and the like. The GPU is a microprocessor for image processing and is connected to the display 120 and the application processor. The GPU is configured to perform mathematical and geometric computations for graphics rendering. The processor 110 may include one or more GPUs and is configured to execute program instructions to generate or change display information.

The display 120 is configured to display an image, a video, and the like. The display 120 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a Miniled, a MicroLed, a Micro-oled, a quantum dot light emitting diode (quantum dot light emitting diodes, QLED), or the like. In some embodiments, the electronic device may include 1 or N displays 120, where N is a positive integer greater than 1.

A series of graphical user interfaces (graphical user interface, GUI) may be displayed on the display 120 of the electronic device, and these GUIs are all main screens of the electronic device. Generally, a size of the display 120 of the electronic device is fixed, and only limited controls can be displayed on the display 120 of the electronic device. A control is a GUI element, which is a software component included in an application, and controls all data processed by the application and an interaction operation related with the data. A user may interact with the control through direct manipulation (direct manipulation), to read or edit related information of the application. Usually, the control may include visual interface elements such as an icon, a button, a menu, a tab, a text box, a dialog box, a status bar, a navigation bar, and a widget.

The electronic device may implement a photographing function by using the ISP, the camera 130, the video codec, the GPU, the display 120, the application processor, and the like.

The ISP is configured to process data fed back by the camera 130. For example, during photographing, a shutter is enabled. Light is transmitted to a photosensitive element of the camera through a lens, and the optical signal is converted into an electrical signal. The photosensitive element of the camera transmits the electrical signal to the ISP for processing, and the electrical signal is converted into an image visible to a naked eye. The ISP may further perform algorithm optimization on a noise point, a brightness, and a skin tone of the image. The ISP may further optimize parameters such as an exposure and a color temperature of a photographing scene. In some embodiments, the ISP may be arranged in the camera 130.

The camera 130 is configured to capture a static image or a video. An object generates an optical image by using a lens, which is projected to a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts the optical signal into an electrical signal, and then transmits the electrical signal to the ISP, to convert the electrical signal into a digital image signal. The ISP outputs the digital image signal to the DSP for processing. The DSP converts the digital image signal into an image signal in a standard format such as RGB or YUV. In some embodiments, the electronic device may include 1 or N cameras 130, where N is a positive integer greater than 1.

The digital signal processor is configured to process a digital signal, and may further process another digital signal in addition to a digital image signal. For example, when the electronic device performs frequency selection, the digital signal processor is configured to perform Fourier transform and the like on frequency energy.

The video codec is configured to compress or decompress a digital video. The electronic device may support one or more types of video codecs. In this way, the electronic device can play or record videos in a plurality of encoding formats, such as moving picture experts group (moving picture experts group, MPEG) 1, MPEG 2, MPEG 3, MPEG 4, and UBWC.

The NPU is a neural-network (neural-network, NN) computing processor, which quickly processes input information by referring to a structure of a biological neural network, for example, a transmission mode between neurons in a human brain, and may further continuously perform self-learning. Applications such as intelligent cognition of the electronic device, for example, image recognition, facial recognition, speech recognition, and text understanding, may be implemented by using the NPU.

The internal memory 140 may be configured to store computer-executable program code. The executable program code includes instructions. The processor 110 runs the instructions stored in the internal memory 140, to perform various function applications and data processing of the electronic device. For example, in this embodiment, by executing the instructions stored in the internal memory 140, the processor 110 may determine whether the to-be-displayed data satisfies the first condition, and generate the surface in the UBWC format corresponding to the to-be-displayed data when determining that the to-be-displayed data satisfies the first condition. The program storage area may store an operating system, an application required for at least one function (such as a sound playback function and an image display function), and the like. The data storage area may store data (such as audio data and an address book) and the like created during use of the electronic device. In addition, the internal memory 140 may include a high-speed random access memory, and may further include a non-volatile memory, for example, at least one magnetic disk storage device, a flash memory device, or a universal flash storage (universal flash storage, UFS). The processor 110 runs the instructions stored in the internal memory 140 and/or the instructions stored in the memory arranged in the processor, to implement various function applications and data processing of the electronic device.

The gyroscope sensor 150A may be configured to determine a motion attitude of the electronic device. In some embodiments, angular velocities of the electronic device around three axes (that is, an x axis, a y axis, and a z axis) may be determined through the gyroscope sensor 150A. The gyroscope sensor 150A may be used for image stabilization during photographing. For example, when the shutter is pressed, the gyroscope sensor 150A measures an angle at which the electronic device jitters, and calculates, based on the angle, a distance for which a lens module needs to compensate, to allow the lens to cancel the jitter of the electronic device through reverse motion, thereby implementing image stabilization. The gyroscope sensor 150A may be further used in scenarios such as navigation and a motion sensing game.

The acceleration sensor 150B may detect magnitudes of accelerations of the electronic device in various directions (generally, three axes). When the electronic device is stationary, a magnitude and a direction of a gravity may be detected. The acceleration sensor may be further configured to recognize a posture of the electronic device, and is applied to applications such as switching between a landscape mode and a portrait mode and a pedometer.

The touch sensor 150C is also referred to as a "touch device". The touch sensor 150C may be arranged on the display 120. The touch sensor 150C and the display 120 form a touchscreen, which is also referred to as a "touch panel". The touch sensor 150C is configured to detect a touch operation performed on or near the touch sensor. The touch sensor may transfer the detected touch operation to the application processor to determine a type of the touch event. The touch sensor may provide a visual output related to the touch operation by using the display 120. In some other embodiments, the touch sensor 150C may be further arranged on a surface of the electronic device at a position different from that of the display 120.

In addition, an operating system is run on the foregoing components. The operating system is, for example, an iOS operating system developed by Apple, an Android open-source operating system developed by Google, or a Windows operating system developed by Microsoft. An application may be installed and run on the operating system.

The operating system of the electronic device may use a layered architecture, an event-driven architecture, a microkernel architecture, a microservice architecture, or a cloud architecture. In this embodiment of this application, an Android system with a layered architecture is used as an example to describe a software architecture of the electronic device.

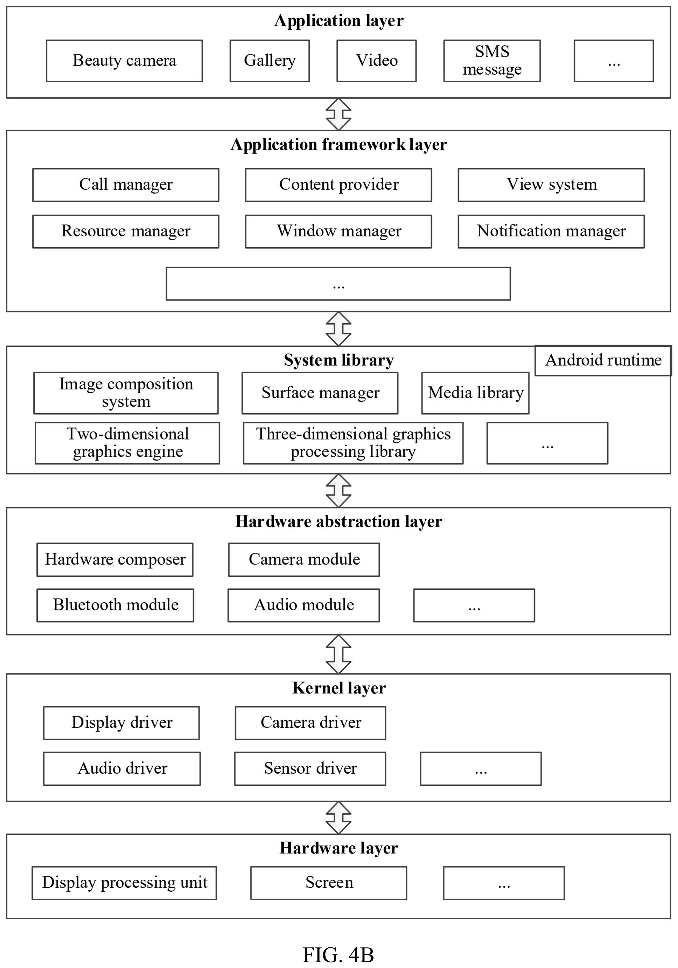

FIG. 4B is a block diagram of a software structure of an electronic device according to an embodiment of this application.

In the layered architecture, software is divided into a plurality of layers, and each layer has a clear role and task. The layers communicate with each other through a software interface. In some embodiments, the Android system is divided into five layers, namely, an application layer, an application framework layer (or referred to as a framework layer), Android runtime (Android runtime) and a system library, a hardware abstraction layer, and a kernel layer from top to bottom. For ease of description, the software structure diagram of the electronic device shown in FIG. 4B further includes the hardware structure in FIG. 4A, such as the display processing unit and the screen.

The application layer may include a series of application packages. As shown in FIG. 4B, the application packages may include applications such as beauty camera, gallery, video, and SMS message.

The application framework layer provides an application programming interface (application programming interface, API) and a programming framework for the applications at the application layer. The application framework layer includes some predefined functions. As shown in FIG. 4B, the application framework layer may include a window manager, a content provider, a view system, a phone manager, a resource manager, a notification manager, and the like.

The window manager is configured to manage a window application. The window manager may obtain a size of the display, determine whether there is a status bar, lock the screen, capture the screen, and the like.

The content provider is configured to store and obtain data and enable the data accessible to an application. The data may include a video, an image, audio, calls that are made and answered, a browsing history and a bookmark, a phonebook, and the like.

The view system includes visual controls such as a control for displaying a text and a control for display a picture. The view system may be configured to construct an application. A display interface may include one or more views. For example, a display interface including an SMS message notification icon may include a view for displaying a text and a view for displaying a picture.

The phone manager is configured to provide a communication function of the electronic device, for example, call status management (including answering, hanging up, and the like).

The resource manager provides various resources such as a localized character string, an icon, an image, a layout file, and a video file for an application.

The notification manager enables an application to display notification information in a status bar, may be configured to convey a notification-type message, and may automatically disappear after a short stay without user interaction. For example, the notification manager is configured to provide a notification of download completion, a message notification, and the like. The notification manager may alternatively be a notification that appears on a top status bar of a system in a form of a graph or a scroll bar text, for example, a notification of an application run on the background, or may be a notification that appears on a screen in a form of a dialog window. For example, text information is prompted on a status bar, a prompt tone is made, the electronic device vibrates, or an indicator light flashes.

Android runtime includes a kernel library and a virtual machine. The Android runtime is responsible for scheduling and managing the Android system.

The kernel library includes two parts: one part is a functional function that needs to be invoked by a java language, and the other part is a core library of Android.

The application layer and the application framework layer are run in the virtual machine. The virtual machine executes Java files of the application layer and the application framework layer as binary files. The virtual machine is configured to execute functions such as object lifecycle management, stack management, thread management, security and exception management, and garbage collection.

The system library may include a plurality of function modules, such as an image composition system (surface flinger), a surface manager (surface manager), a media library (Media Libraries), a three-dimensional graphics processing library (for example, OpenGL ES), a 2D graphics engine (for example, SGL).

The image composition system is configured to control image composition and to generate a vertical synchronization (vertical synchronization, Vsync) signal. Specifically, a main function is to receive graphic data buffers from a plurality of sources, composite the graphic data buffers, and transmit the graphic data buffers to display hardware (a touch screen). In addition, the image composition system is further responsible for error synchronization with a hardware HW-VSync signal and simulation of a software VSync signal, including an SF-VSync signal and an APP-VSync signal. A composer flow control, a signal simulator, and a connection manager cooperate to notify the application and the SurfaceFlinger of the VSync signal.

The surface manager is configured to manage a display subsystem, and provide fusion of 2D layers and 3D layers for a plurality of applications.

The media library supports playback and recording in a plurality of common audio and video formats, static image files, and the like. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, surface processing, and the like.

The 2D graphics engine is a drawing engine for 2D drawing.

The hardware abstraction layer may include a plurality of library modules, and the library modules may be a hardware composer (hardware composer, HWC), a camera library module, or the like. The Android system may load the corresponding library module for device hardware, and then realize the purpose of accessing the device hardware by the application framework layer.

A hardware compositor (hardware composer, HWC) is mainly configured to provide hardware support for an image composition system, and supports a surface composition module and a display module.

The kernel layer is a layer between hardware and software. The kernel layer at least includes a touch panel (touch panel, TP) driver, a display driver, a Bluetooth driver, a Wi-Fi driver, a keyboard driver, a shared memory driver, an ambient light sensor driver, a camera driver, and the like.

The display driver may transmit an instruction and data to a graphics processing unit (GPU) or dedicated graphics processing hardware by using the API, and perform operations such as 3D rendering, video decoding, and GPU calculation. The hardware may include a display, touch hardware, a processor, a GPU, and the like.

It should be noted that although this embodiment of this application is described by using the Android system as an example, the basic principle thereof is also applicable to electronic devices based on operating systems such as iOS and Windows.

### Embodiment I

To make up for a power consumption from processing of a to-be-rotated surface in a non-UBWC format by the DPU by using the GPU, an IWE module is introduced to the DPU to perform preprocessing on the to-be-rotated surface in the non-UBWC format, and then composite the to-be-rotated surface by using the HWC. Due to an insufficient processing capability of the IWE module, a relatively long processing time is spent for the surface in the non-UBWC format. Consequently, when the electronic device plays a video in full screen/plays a to-be-rotated surface in a non-UBWC format, continuous frame losses and relatively obvious frame freezing occur, causing relatively poor user experience.

An embodiment of this application provides a surface composition method for a surface in a non-UBWC format, to perform transform operations such as rotation and zoom on a surface in a non-UBWC format. Processing performance of the IWE module is improved, so as to shorten a time spent in preprocessing a transformed surface in the non-UBWC format by using the IWE module, thereby reducing a time spent for surface composition of the transformed surface in the non-UBWC format, and alleviating a problem of frame freezing caused by frame losses.

Specifically, an operating frequency of the DPU is increased, to increase a processing frequency of the IWE module. Through frequency increase, the time spent by the IWE module in preprocessing the transformed surface in the non-UBWC format is shortened. For example, in the related art, a common DPU operating frequency usually applied to an electronic device includes 60 Hz and 90 Hz. In this scenario, the operating frequency of the DPU is increased to 120 Hz, so that the time spent in preprocessing the transformed surface in the non-UBWC format can be reduced from 9 ms to 5 ms, which can effectively reduce continuous video frame losses, reduce frame freezing during video playback, and improving user experience.

It should be noted that for ease of description, a to-be-rotated surface is used as an example for description, but a surface processed through another graphic transform operation may also be used. This is not specifically limited in this application.

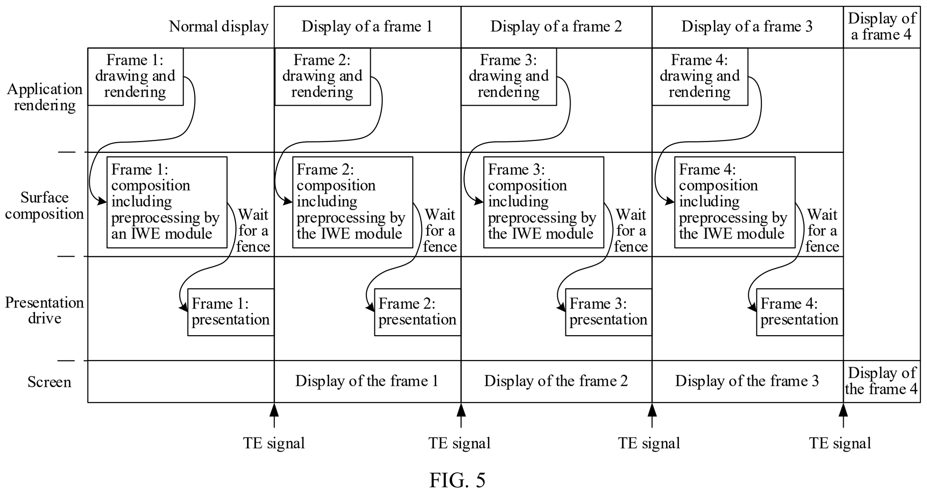

For ease of understanding, a display pipeline process of an electronic device according to an embodiment of this application is described below by using an example with reference to FIG. 5. A frequency of a DPU is increased, to improve processing performance of an IWE module. A description is provided by using an example in which the electronic device plays a video in a full screen (in other words, rotation processing is performed on a surface). The video is directly outputted as a surface in a non-UBWC format at a decoding stage. This is because a video/image processing algorithm can only perform image processing on a surface in a non-UBWC format. The displayed video is a 4-frame video. In chronological order of playback, content displayed by the electronic device sequentially corresponds to a frame 1, a frame 2, a frame 3, and a frame 4.

Display of the frame 1 is used as an example. An application of the electronic device draws the frame 1 through a view system and renders the frame 1 through an image rendering system. After the frame 1 is drawn and rendered, the application of the electronic device transmits a surface corresponding to the drawn and rendered frame 1 to an image composition system. The application of the electronic device performs image processing by using a video/image processing algorithm or a third-party video/image processing algorithm, and a format of the surface corresponding to the drawn and rendered frame 1 is a non-UBWC format. The image composition system performs preprocessing on a to-be-rotated surface in the non-UBWC format by using the IWE module. After preprocessing by the IWE module is completed, surface composition is performed by using the HWC. After the surface composition process of the frame 1 is completed and a fence is released, the electronic device may invoke a display driver of a kernel layer to refresh and display the composite frame 1 onto a screen when a screen hardware TE signal arrives. Because the operating frequency of the DPU is increased, the preprocessing time spent by the IWE module is shortened. Therefore, when a screen hardware TE signal arrives and the composite frame 1 needs to be refreshed and displayed onto the screen, the frame 1 on which the surface composition is completed is transmitted to the display driver of the kernel layer after the surface composition of the frame 1 is completed and the fence is released. The frame 1 on which the surface composition is completed is refreshed and displayed onto the screen when the display TE signal corresponding to the frame 1 arrives. It should be noted that display pipeline processes of the frame 2, the frame 3, and the frame 4 are similar to that of the frame 1, which are not described in detail herein.

This embodiment of this application provides a surface composition method, in which the operating frequency of the DPU is increased, to shorten the time spent by the IWE module in preprocessing the transformed surface in the non-UBWC format, thereby effectively alleviating a problem of continuous video frame losses, and alleviating a problem of frame freezing during video playback.

### Embodiment II

An operating frequency of a DPU is increased, to shorten a time spent by the IWE module in preprocessing a transformed surface in a non-UBWC format obtained after transform processing, and alleviate frame freezing caused by continuous video frame losses. However, increasing the operating efficiency of the DPU cannot avoid frame freezing caused by continuous video frame losses as a result of the IWE module spending a relatively long time in preprocessing the transformed surface in the non-UBWC format.

With the rapid development of science and technology, for a video playback scenario of an electronic device, an image/video processing algorithm usually takes effect in a scenario of performing image processing on a to-be-played video of the electronic device. For example, image quality enhancement is performed on a to-be-played video, a beautifying filter is added to the to-be-played video, and the like. To ensure that image enhancement can be performed so that a surface outputted through decoding of a to-be-played video is a surface in a non-UBWC format, after a transform operation such as rotation or zoom is performed on the surface in the non-UBWC format, an IWE module is used to perform preprocessing on the transformed surface in the non-UBWC format. Because the IWE module spends an excessively long time in preprocessing the to-be-transformed surface in the non-UBWC format, continuous frame losses and frame freezing of a video occur.

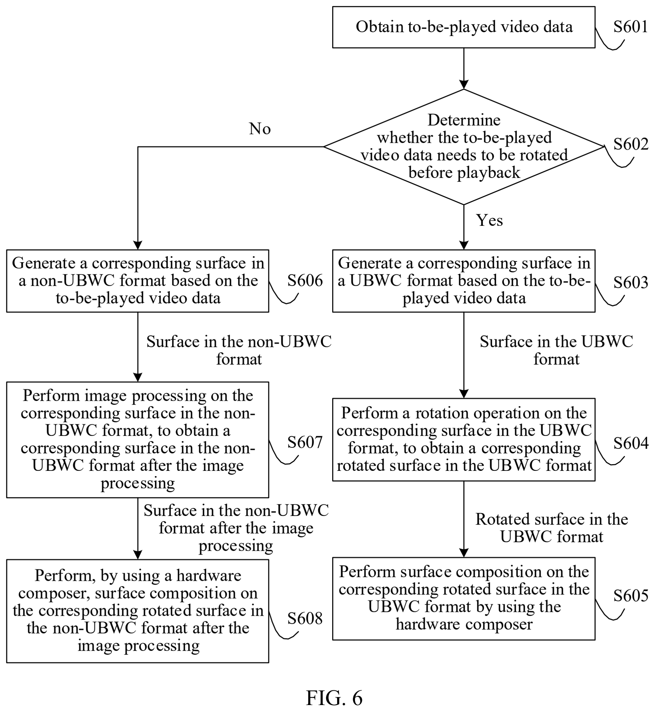

Another surface composition method provided in an embodiment of this application is described below with reference to FIG. 6.

S601: Obtain the to-be-played video data.

The to-be-played video data may be downloaded from a network by using the electronic device, or may be transmitted to the electronic device by using an external memory. This is not specifically limited in this application.

S602: Determine whether the to-be-played video data needs to be rotated and played.

When the to-be-played video data needs to be rotated before playback, for example, the to-be-played video data needs to be played in a landscape mode, it indicates that rotation needs to be performed on a surface corresponding to the to-be-played video data and outputted through decoding before a corresponding surface composition process is performed.

When the to-be-played video data does not need to be rotated before playback, for example, the to-be-played video is to be played in a portrait mode, it indicates that rotation does not need to be performed on a surface corresponding to the to-be-played video data and outputted through decoding, and a corresponding surface composition process is directly performed.

When the to-be-played video data needs to be rotated before playback, S603 is performed. When the to-be-played video data does not need to be rotated before playback, S606 is performed.

S603: Generate a corresponding surface in a UBWC format based on the to-be-played video data.

The to-be-played video data is decoded, and a corresponding application programming interface (Application Programming Interface, API) is invoked, to output a corresponding surface in a UBWC format.

S604: Perform a rotation operation on the corresponding surface in the UBWC format, to obtain a corresponding rotated surface in the UBWC format.

S605: Perform surface composition on the corresponding rotated surface in the UBWC format by using a hardware composer. When the to-be-played video data needs to be rotated before playback, if a format of the generated surface is a non-UBWC format, after a transform operation is performed on the surface in the non-UBWC format, the transformed surface in the non-UBWC format needs to be preprocessed by using an IWE module before the surface composition process is performed. In the related art, the IWE module spends a relatively long time in preprocessing the transformed surface in the non-UBWC format, resulting in continuous video frame losses and frame freezing during video playback.

Therefore, no image processing is performed on the surface corresponding to the to-be-played video data. Therefore, generating the surface in the UBWC format based on the to-be-played video data ensures that a surface outputted through decoding of the to-be-played video data is in a UBWC format. A DPU can perform processing on the transformed surface in the UBWC format, without a need to introduce an IWE module to perform preprocessing before a hardware composer performs surface composition. Because no image processing needs to be performed on the to-be-played video data, the surface in the UBWC format is generated based on the to-be-played video, and no image processing is performed on the corresponding surface in the UBWC format, and therefore no impact is generated on a playback effect of the to-be-played video. After the transform operation is performed on the surface in the UBWC format, the surface composition process is directly performed, without a need to perform preprocessing by using the IWE module, thereby omitting preprocessing by the IWE module, and directly avoiding a problem of continuous frame losses as a result of the IWE module spending a relatively long time in preprocessing.

S606: Generate a corresponding surface in a non-UBWC format based on the to-be-played video data.

The to-be-played video data is decoded, and a corresponding application programming interface (Application Programming Interface, API) is invoked, to output a corresponding surface in a non-UBWC format.

S607: Perform image processing on the corresponding surface in the non-UBWC format, to obtain a corresponding surface in the non-UBWC format after the image processing.

S608: Perform, by using a hardware composer, surface composition on the corresponding surface in the non-UBWC format after the image processing.

When the to-be-played video data does not need to be rotated before playback, regardless of whether the surface obtained through decoding is in the UBWC format or the non-UBWC format, preprocessing by using the IWE module is not needed. Therefore, a problem of continuous video frame losses and frame freezing during video playback as a result of the IWE module spending a relatively long time in preprocessing is avoided. Therefore, image processing, for example, video enhancement and video filter beautifying may be performed on the to-be-played video data.

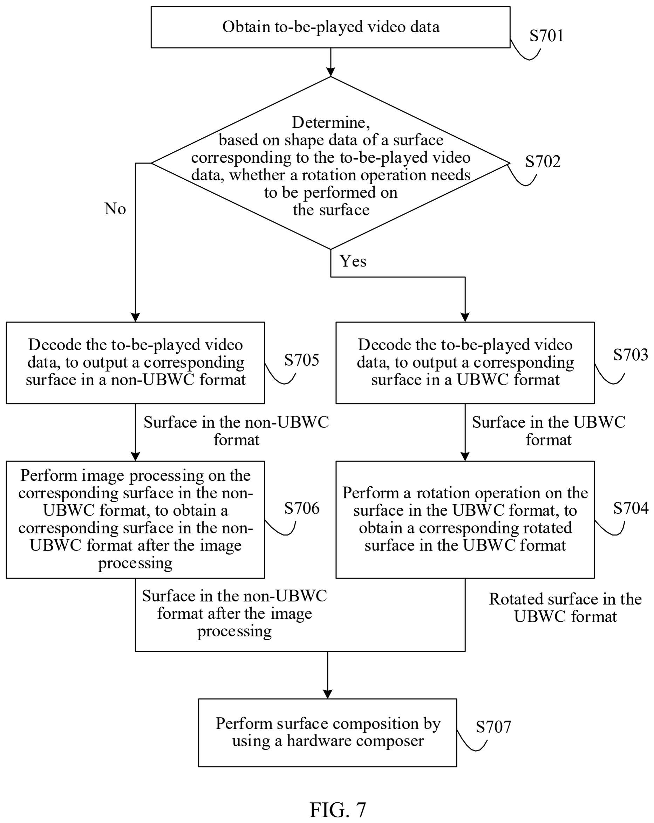

In a possible implementation, a process of a surface composition method shown in FIG. 7 is performed.

S701: Obtain to-be-played video data.

The to-be-played video data may be downloaded from a network by using the electronic device, or may be transmitted to the electronic device by using an external memory. This is not specifically limited in this application.

S702: Determine, based on shape data of a surface corresponding to the to-be-played video, whether a rotation operation needs to be performed on the surface.

The surface is a rectangular surface. It is determined whether a width of the corresponding surface is greater than a height thereof. When the width of the corresponding surface is greater than the height thereof, it indicates that the surface is a to-be-rotated surface, that is, the to-be-played video needs to be rotated before playback. When the width of the corresponding surface is not greater than the height thereof, it indicates that the surface is not a to-be-rotated surface, that is, the to-be-played video does not need to be rotated before playback.

If yes, S703 is performed. If no, S706 is performed.

S703: Decode the to-be-played video data, to output a corresponding surface in a UBWC format.

When the surface corresponding to the to-be-played video data is a to-be-rotated surface, no image processing is performed on the to-be-played video data, and the surface outputted by through decoding of the to-be-played video is kept in the UBWC format. A DPU can perform surface composition on the to-be-rotated surface in the UBWC format. An IWE module does not need to be introduced to perform preprocessing, and a surface composition process is directly performed, thereby omitting preprocessing by the IWE module, and directly avoiding a problem of continuous frame losses as a result of the IWE module spending a relatively long time in preprocessing.

S704: Perform a rotation operation on the corresponding surface in the UBWC format, to obtain a corresponding rotated surface in the UBWC format.

Because no image processing is allowed to be performed, it is ensured that the surface outputted through decoding is in the UBWC format. An IWE module does not need to be introduced to perform preprocessing after the rotation operation is performed on the surface in the UBWC format.

S705: Decode the to-be-played video data, to output a corresponding surface in a non-UBWC format.

When the surface corresponding to the to-be-played video data is not a to-be-rotated surface, image processing (for example, video enhancement) is allowed to be performed on the to-be-played video data. Therefore, the to-be-played video data is decoded to output a surface in a non-UBWC format. Because the surface corresponding to the to-be-played video is not a to-be-rotated surface, rotation does not need to be performed on the surface outputted through decoding. Regardless of whether the surface obtained through decoding is in the UBWC format or the non-UBWC format, preprocessing by using the IWE module is not needed. Therefore, a problem of continuous video frame losses and frame freezing during video playback as a result of the IWE module spending an excessively long time in preprocessing is avoided. However, to ensure that corresponding image processing can be performed, the to-be-played video data is controlled to be decoded to output the corresponding surface in the non-UBWC format.

S706: Perform image processing on the corresponding surface in the non-UBWC format, to obtain a corresponding surface in the non-UBWC format after the image processing.

S707: Perform surface composition by using a hardware composer.

According to the surface composition method provided in this embodiment of this application, in a scenario of performing image processing on to-be-played video, it is determined whether the to-be-played video data needs to be rotated before playback. When the to-be-played video data does not need to be rotated before playback, image processing is allowed to be performed on the to-be-played video data. When the to-be-played video data needs to be rotated before playback, no image processing is allowed to be performed on the to-be-played video data. When the to-be-played video data does not need to be rotated before playback, regardless of whether the surface outputted through decoding is in the UBWC format or the non-UBWC format, the IWE module is not introduced for preprocessing. When the to-be-played video data needs to be rotated before playback, for a to-be-rotated surface in the non-UBWC format, the IWE module needs to be introduced for preprocessing. Therefore, no image processing is allowed to be performed, to ensure that the surface outputted through decoding is in the UBWC format. After rotation is performed on the surface in the UBWC format, surface composition is directly performed without preprocessing by the IWE module. It may be learned that the video playback scenario is isolated, so as to omit preprocessing by the IWE module, thereby avoiding continuous frame losses as a result of the IWE module spending an excessively long time in preprocessing, and improving smoothness of video playback.

### Embodiment III

For a video playback scenario of an electronic device, it may be selectively determined whether to perform image processing on the to-be-played video. In addition, there is a scenario in which image processing is inevitable in the electronic device, in which a surface transform operation needs to be performed. In other words, preprocessing by the IWE module is inevitable. For example, for a camera filter/special effect preview scenario, because a mounting direction of a camera of an electronic device and a screen display direction of the electronic device are different, corresponding surface rotation is inevitable if an image taken by the camera needs to be previewed in real time, and the camera filter/special effect preview is inevitably subject to image processing. Therefore, for such a scenario, neither surface transform nor image processing can be omitted. For this scenario, an embodiment of this application provides another surface composition method.

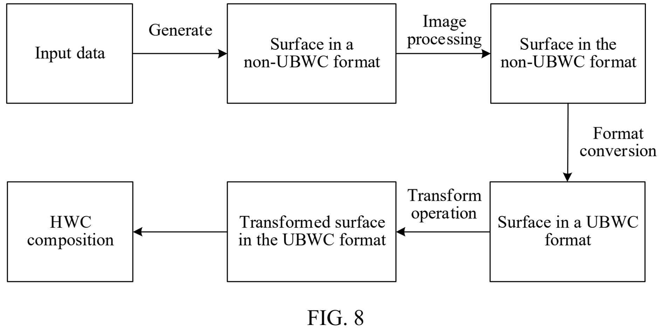

Another surface composition method provided in an embodiment of this application is described below with reference to FIG. 8.

A surface in a non-UBWC format is generated based on input data (to-be-displayed data). Image processing is performed on the surface in the non-UBWC format, to obtain a surface in the non-UBWC format after the image processing. Before a surface composition process and a presentation drive process are performed on the surface in the non-UBWC format after the image processing, format conversion is performed, to convert the surface in the non-UBWC format after the image processing into a surface in a UBWC format after the image processing. Transform operations such as rotation and zoom are performed on the surface in the UBWC format after the image processing, to obtain a transformed surface in the UBWC format after the image processing. An image composition system directly composites the rotated surface in the UBWC format by using an HWC, to complete the surface composition process. Before the surface composition process is performed, the surface in the non-UBWC format outputted through image processing is converted into a surface in the UBWC format, then transform operations such as rotation and zoom are performed on the surface in the UBWC format, and finally, the transformed surface in the UBWC format is composited. Because the format is converted into the UBWC format, composition of the rotated surface does not need preprocessing by using the IWE module, thereby avoiding continuous frame losses caused by a relatively long processing time due to insufficient performance of the IWE module.

For a scenario in which image processing and a specific surface transform operation are inevitable, format conversion is performed to convert the outputted surface in the non-UBWC format into a surface in the UBWC format, so as to perform a transform operation on the surface in the UBWC format and then perform surface composition on the transformed surface in the UBWC format. Preprocessing by the IWE module is omitted, and the format conversion is located in an application side process, which does not affect a time spent for a surface composition process. Because preprocessing by the IWE module is omitted, continuous frame losses caused by a relatively long time spent due to insufficient preprocessing performance of the IWE module are avoided, thereby improving display smoothness of the electronic device.

### Embodiment IV

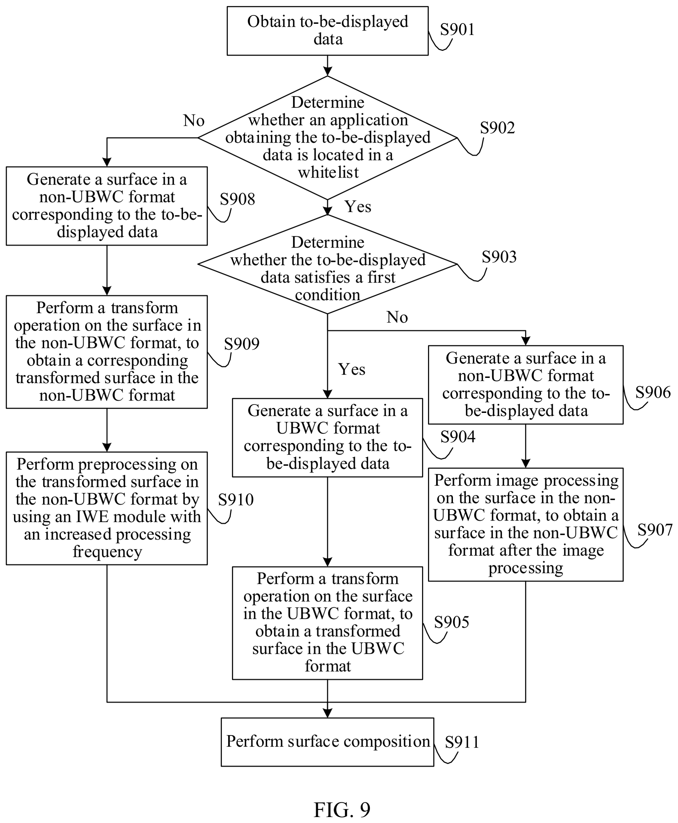

Various application scenarios are considered for surface composition of a rotated surface in a non-UBWC format. To resolve a problem of continuous frame losses caused by a relatively long preprocessing time spent by the IWE module, another surface composition method provided in an embodiment of this application is described in detail with reference to FIG. 9.

S901: Obtain to-be-displayed data.

The to-be-displayed data may be generated by using an application, or may be downloaded from a network. This application does not specifically limit a source for obtaining the to-be-displayed data.

S902: Determine whether an application obtaining the to-be-displayed data is located in a whitelist.

An image processing algorithm may be applied to a plurality of applications, and an application in the whitelist indicates that the application uses the image processing algorithm. For example, if a whitelist of an image enhancement algorithm includes an application A and an application B, it indicates that the application A and the application B run the image enhancement algorithm.

If yes, S903 is performed. If no, S908 is performed.

S903: Determine whether the to-be-displayed data satisfies a first condition.

The first condition is displaying the surface of the to-be-displayed data after transform. In other words, it is determined whether the to-be-displayed data needs to be transformed for display. The transform operation includes a rotation operation, a zoom operation, and the like.

Specifically, it is determined based on shape data of a surface corresponding to the to-be-displayed data whether the to-be-displayed data satisfies the first condition, where the shape data of the surface includes a length of the surface and a width of the surface. When the length of the surface corresponding to the to-be-displayed data is greater than the width of the surface corresponding to the to-be-displayed data, the to-be-displayed data satisfies the first condition. When the length of the surface corresponding to the to-be-displayed data is less than or equal to the width of the surface corresponding to the to-be-displayed data, the to-be-displayed data does not satisfy the first condition.

If yes, S904 is performed. If no, S906 is performed.

S904: Generate a surface in a UBWC format corresponding to the to-be-displayed data.

S905: Perform a transform operation on the surface in the UBWC format, to obtain a transformed surface in the UBWC format.

When the surface of the to-be-displayed data needs to be transformed and then displayed, the format of the surface corresponding to the generated to-be-displayed data is controlled to be the UBWC format, so as to omit preprocessing on a transformed surface in a non-UBWC format by an IWE module, thereby avoiding a phenomenon of continuous frame losses as a result of the IWE module spending an excessively long time in preprocessing, and improving display smoothness of the electronic device.

S906: Generate a surface in a non-UBWC format corresponding to the to-be-displayed data.

S907: Perform image processing on the surface in the non-UBWC format, to obtain a surface in the non-UBWC format after the image processing.

When the surface of the to-be-displayed data does not need to be transformed and then displayed, the transform operation is not performed on the surface, the surface in the non-UBWC format is directly generated, image processing is performed on the surface in the non-UBWC format, and then surface composition is performed on the surface in the non-UBWC format after the image processing. In this way, preprocessing the transformed surface in the non-UBWC format by the IWE module is omitted, a phenomenon of continuous frame losses as a result of the IWE module spending an excessively long time in preprocessing is avoided, and display smoothness of the electronic device is improved.

S908: Generate a surface in a non-UBWC format corresponding to the to-be-displayed data.

S909: Perform a transform operation on the surface in the non-UBWC format, to obtain a corresponding transformed surface in the non-UBWC format.

S910: Perform preprocessing on the transformed surface in the non-UBWC format by using an IWE module with an increased processing frequency.

Preprocessing is performed on the transformed surface in the non-UBWC format by using the IWE module with the increased processing frequency; and surface composition is performed on the transformed surface in the non-UBWC format after the preprocessing. When preprocessing by the IWE module is inevitable, a processing frequency of the IWE module is increased, to shorten a preprocessing time spent by the IWE module, thereby reducing a phenomenon of continuous frame losses and improving display smoothness of the electronic device.

S911: Perform surface composition.

In a possible implementation, after the to-be-displayed data is obtained, a surface in a non-UBWC format corresponding to the to-be-displayed data is generated; image processing is performed on the surface in the non-UBWC format, to obtain a surface in the non-UBWC format after the image processing; format conversion is performed on the surface in the non-UBWC format after the image processing, to obtain a corresponding surface in a UBWC format after the image processing; a transform operation is performed on the surface in the UBWC format after the image processing, to obtain a transformed surface in the UBWC format after the image processing; and surface composition is performed on the transformed surface in the UBWC format after the image processing.

In a case that image processing and a transform operation are inevitable, the format of the surface is converted, so as to omit preprocessing by the IWE module, thereby reducing a phenomenon of continuous frame losses as a result of the IWE module spending an excessively long in preprocessing, and improving display smoothness of the electronic device.

This embodiment of this application provides a surface composition method. For a particular condition, preprocessing by the IWE module is omitted, thereby avoiding the phenomenon of continuous frame losses as a result of the IWE module spending an excessively long in preprocessing, and improving display smoothness of the electronic device. When preprocessing by the IWE module is inevitable, processing efficiency of the IWE module is increased, to reduce a preprocessing time spent by the IWE module, thereby improving display smoothness of the electronic device.

An embodiment of this application further provides a computer-readable storage medium, storing a computer program or instructions that, when run, cause an electronic device to implement the functions or steps described above.

An embodiment of this application further provides a computer program product, including a computer program or instructions that, when executed by a processor, cause an electronic device to implement the functions or steps described above.

The foregoing descriptions are merely specific implementations of this application. However, the protection scope of this application is not limited thereto. Any variation or replacement within the technical scope disclosed in this application shall fall within the protection scope of this application. Therefore, the protection scope of this application shall be subject to the protection scope of the claims.

## Claims

1. A surface composition method, applied to an electronic device, the method comprising:
obtaining to-be-displayed data;
generating a surface in a UBWC format corresponding to the to-be-displayed data when the to-be-displayed data satisfies a first condition, wherein the first condition is displaying the surface of the to-be-displayed data after transform, and converting the surface of the to-be-displayed data comprises rotating or zooming the surface of the to-be-displayed data;
performing a transform operation on the surface in the UBWC format, to obtain a transformed surface in the UBWC format; and
performing surface composition on the transformed surface in the UBWC format.

2. The method according to claim 1, wherein that the to-be-displayed data satisfies the first condition comprises:
determining, based on shape data of the surface corresponding to the to-be-displayed data, whether the to-be-displayed data satisfies the first condition, wherein the shape data of the surface comprises a length of the surface and a width of the surface; and
when the length of the surface corresponding to the to-be-displayed data is greater than the width of the surface corresponding to the to-be-displayed data, the to-be-displayed data satisfies the first condition.

3. The method according to claim 1, further comprising:
generating a surface in a non-UBWC format corresponding to the to-be-displayed data when the to-be-displayed data does not satisfy the first condition; and
performing surface composition on the surface in the non-UBWC format.

4. The method according to claim 3, wherein after the generating a surface in a non-UBWC format corresponding to the to-be-displayed data, the method further comprises:
performing image processing on the surface in the non-UBWC format, to obtain a surface in the non-UBWC format after the image processing; and
the performing surface composition on the surface in the non-UBWC format comprises: performing surface composition on the surface in the non-UBWC format after the image processing.

5. The method according to claim 3 or 4, wherein that the to-be-displayed data does not satisfy the first condition comprises:
determining, based on shape data of the surface corresponding to the to-be-displayed data, whether the to-be-displayed data satisfies the first condition, wherein the shape data of the surface comprises a length of the surface and a width of the surface; and
when the length of the surface corresponding to the to-be-displayed data is less than or equal to the width of the surface corresponding to the to-be-displayed data, the to-be-displayed data does not satisfy the first condition.

6. The method according to claim 1, wherein after the obtaining to-be-displayed data, the method further comprises:
generating a surface in a non-UBWC format corresponding to the to-be-displayed data;
performing image processing on the surface in the non-UBWC format, to obtain a surface in the non-UBWC format after the image processing;
performing format conversion on the surface in the non-UBWC format after the image processing, to obtain a corresponding surface in a UBWC format after the image processing;
performing a transform operation on the surface in the UBWC format after the image processing, to obtain a transformed surface in the UBWC format after the image processing; and
performing surface composition on the transformed surface in the UBWC format after the image processing.

7. The method according to claim 1, wherein after the obtaining to-be-displayed data, the method further comprises:
determining whether an application obtaining the to-be-displayed data is located in a whitelist; and
determining, when the application obtaining the to-be-displayed data is located in the whitelist, whether the to-be-displayed data satisfies the first condition.

8. The method according to claim 7, wherein the electronic device comprises a display processing unit DPU, the DPU is provided with an IWE module, an operating frequency of the DPU is increased, to increase a processing frequency of the IWE module, and the method further comprises:
generating a surface in a non-UBWC format corresponding to the to-be-displayed data when the application obtaining the to-be-displayed data is not located in the whitelist;
performing a transform operation on the surface in the non-UBWC format, to obtain a corresponding transformed surface in the non-UBWC format;
performing preprocessing the transformed surface in the non-UBWC format by using the IWE module with the increased processing frequency; and
performing surface composition on the transformed surface in the non-UBWC format after the preprocessing.

9. An electronic device, comprising a processor and a memory, wherein
the memory stores computer-executable instructions; and
the processor executes the computer-executable instructions stored in the memory, to cause the processor to perform the method according to any one of claims 1 to 8.

10. A computer-readable storage medium, storing a computer program or instructions that, when run, implement the method according to any one of claims 1 to 8.
